# EUROPEAN PATENT APPLICATION

(11) **EP 3 876 087 A1**
(43) Date of publication of application: **08.09.2021**
(21) Application number: 19898482.5
(22) Date of filing: 17.07.2019
(51) Int. Cl.: G06F 3/06

(54) **METHOD FOR OPERATING STORAGE DEVICE AND STORAGE DEVICE**

(30) Priority: 18.12.2018 CN 201811549013
(71) Applicant: Huawei Technologies Co., Ltd., Longgang District Shenzhen, Guangdong 518129 (CN)
(72) Inventor: YE, Zhihao, Shenzhen Guangdong 518057 (CN); GUO, Dan, Shenzhen Guangdong 518057 (CN); DENG, Enhua, Shenzhen Guangdong 518057 (CN); LI, Zhixiong, Shenzhen Guangdong 518057 (CN)
(74) Representative: Maiwald Patent- und Rechtsanwaltsgesellschaft mbH
(86) International application number: PCT/CN2019/096428
(87) International publication number: WO 2020/125001

(57) **Abstract**

A storage device and a storage device operation method are provided. The storage device has a processing capability for a first communications protocol and a processing capability for a second communications protocol. The method includes: receiving an adaptive command (110); and identifying the adaptive command, and determining, according to the adaptive command, to execute the first communications protocol or the second communications protocol for an operation (120). According to the foregoing method, the storage device can perform an adaptive operation between different communications protocols.

## Description

### TECHNICAL FIELD

Disclosed embodiments of the present invention relate to the field of storage technologies, and more specifically, to a storage device operation method and a storage device.

### BACKGROUND

In the field of storage technologies, due to characteristics such as a high rate and a small volume, solid-state storage devices have become an important choice for different electronic devices, such as computers and smartphones. At present, the solid-state storage device generally works on only one type of host (host) device. For example, an SD card works on an SD host device. In this way, compatibility is relatively poor. For a user, a same memory can work on only one type of host device. This is not convenient for data transfer between a plurality of devices. However, for a manufacturer, different materials need to be prepared for host devices with different protocols. This is not convenient for production and manufacturing. In addition, for solutions with different protocols, a driver needs to be switched. Consequently, a workload is heavy.

### SUMMARY

In view of this, the present invention provides a storage device operation method and a storage device, to resolve the foregoing technical problem.

According to a first aspect of the present invention, a storage device operation method is provided. The storage device has a processing capability for a first communications protocol and a processing capability for a second communications protocol. The method includes: receiving an adaptive command; and identifying the adaptive command, and determining, according to the adaptive command, to execute the first communications protocol or the second communications protocol for an operation.

One of the first communications protocol and the second communications protocol is an SD protocol, and the other is an eMMC protocol.

The receiving an adaptive command includes: receiving an initialization command.

After the identifying the adaptive command, the method includes: if it is identified that the initialization command is a CMD 1 command, executing the eMMC protocol, to perform an initialization operation in response to the CMD 1 command.

After the identifying the adaptive command, the method includes: if it is identified that the initialization command is a CMD 8 command, executing the SD protocol, to perform an initialization operation in response to the CMD 1 command.

Before the receiving an initialization command, the receiving an adaptive command further includes:
receiving a reset command shared by the eMMC protocol and the SD protocol, to enable the storage device to enter an idle state.

The reset command is a CMD 0 command.

Before the receiving an adaptive command, the method further includes: performing a power-on operation, to enable the storage device to enter a working state. After the initialization operation is performed, the method further includes: sending an initialization result, to execute the eMMC protocol or the SD protocol for an operation.

A voltage used during the power-on operation is 3.3 V.

According to a second aspect of the present invention, a storage device is provided. The storage device has a processing capability for a first communications protocol and a processing capability for a second communications protocol, and the storage device is configured to perform the operation method in the first aspect.

Beneficial effects of the present invention are as follows: The storage device has the processing capability for the first communications protocol and the processing capability for the second communications protocol. The storage device receives the adaptive command; and determines, according to the adaptive command, to execute the first communications protocol or the second communications protocol for an operation, thereby implementing an adaptive operation between different communications protocols, so that the storage device may be identified by hosts with different communications protocols, to be suitable for the hosts with the different communications protocols.

### BRIEF DESCRIPTION OF DRAWINGS

FIG. 1 is a flowchart of a storage device operation method according to a first embodiment of the present invention;
FIG. 2 is a flowchart of a storage device operation method according to a second embodiment of the present invention;
FIG. 3 is a flowchart of a storage device operation method according to a third embodiment of the present invention;
FIG. 4 is a flowchart of a storage device operation method according to a fourth embodiment of the present invention;
FIG. 5 is a flowchart of a storage device operation method according to a fifth embodiment of the present invention;
FIG. 6 is a flowchart of a storage device operation method according to a sixth embodiment of the present invention; and
FIG. 7 is a flowchart of a storage device operation method according to a seventh embodiment of the present invention.

### DESCRIPTION OF EMBODIMENTS

Terms used throughout this specification and the claims refer to specific components. A person skilled in the art may understand that an electronic device manufacturer can use different names to refer to a same component. In this specification, components are not distinguished by names, but by functions. In the following specification and claims, the term "including" is an openended determiner. Therefore, the term "including" should be interpreted as "including but not limited to ...". In addition, the term "coupled" is intended to mean an indirect electrical connection or a direct electrical connection. Therefore, when an apparatus is coupled to another apparatus, the connection may be a direct electrical connection or an indirect electrical connection implemented by using another apparatus and a connection portion.

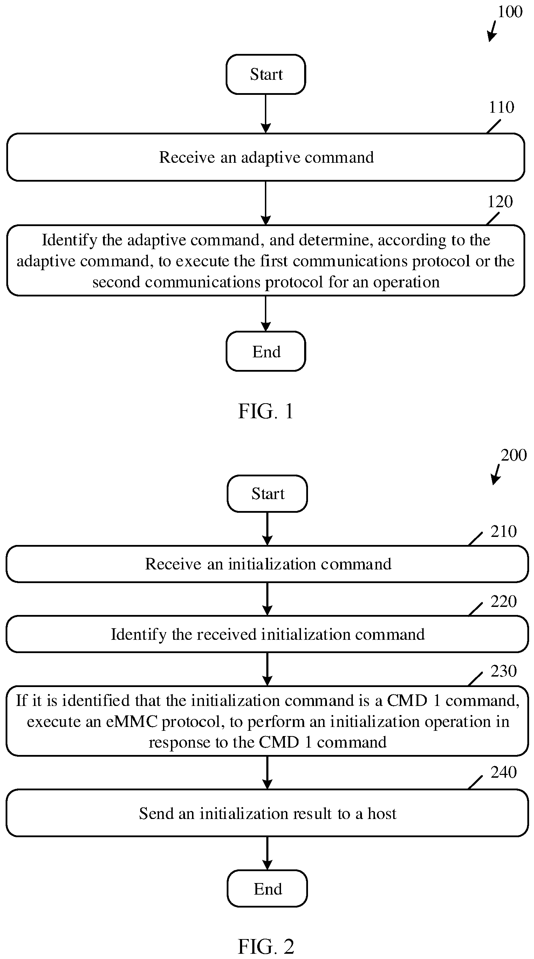

FIG. 1 is a flowchart of a storage device operation method according to a first embodiment of the present invention. In this embodiment, a storage device may be a storage card. The storage card is an independent storage medium used in a mobile phone, a digital camera, a tablet computer, a portable computer, an MP3, or another digital product, and is generally in a card form. Therefore, the storage card is collectively referred to as a "storage card", and is also referred to as a "digital storage card", a "digital storage card", a "storage card", or the like. The storage device has a processing capability for a first communications protocol and a processing capability for a second communications protocol. The first communications protocol may include but is not limited to at least one of an SD protocol, an eMMC protocol, or a UFS protocol. Similarly, the second communications protocol may include but is not limited to at least one of the SD protocol, the eMMC protocol, or the UFS protocol. It should be understood that the first communications protocol and the second communications protocol are different communications protocols. In this embodiment, the method 100 includes the following steps.

Step 110: Receive an adaptive command.

The storage device may receive the adaptive command from an external host, so that the storage device makes a response according to the adaptive command sent by the host, to perform a corresponding operation.

Step 120: Identify the adaptive command, and determine, according to the adaptive command, to execute the first communications protocol or the second communications protocol for an operation.

After receiving the adaptive command, the storage device identifies the adaptive command, and determines, according to the adaptive command, to execute the first communications protocol or the second communications protocol for an operation.

In this embodiment, the storage device has the processing capability for the first communications protocol and the processing capability for the second communications protocol. The storage device receives the adaptive command; and determines, according to the adaptive command, to execute the first communications protocol or the second communications protocol for an operation, thereby implementing an adaptive operation between different communications protocols, so that the storage device may be identified by hosts with different communications protocols, to be suitable for the hosts with the different communications protocols.

In an embodiment, one of the first communications protocol and the second communications protocol is an SD protocol, and the other is an eMMC protocol. A person skilled in the art learns that a related pin for implementing the SD protocol is shown in the following table:

| Pin number | Name | Function (SD mode) | Function (SPI mode) |
|---|---|---|---|
| 1 | DAT 3/CS | Data 3 | Chip selection |
| 2 | CMD/DI | Command | Master output slave input |
| 3 | VSS 1 | GND | GND |
| 4 | VDD | Power supply | Power supply |
| 5 | CLK | Clock | Clock |
| 6 | VSS 2 | GND | GND |
| 7 | DAT 0/DO | Data 0 | Master input slave output |
| 8 | DAT 1/IRQ | Data 1 | Reserved |
| 9 | DAT 2/NC | Data 2 | Reserved |

The eMMC (Embedded Multimedia Card) protocol is a standard specification established by the MMC Association mainly for an embedded memory of a product such as a mobile phone or a tablet computer. ANAND flash, a controller, and a standard packaging interface may be included for implementing the eMMC protocol. A hardware interface for implementing the eMMC protocol is partially the same as a hardware interface for implementing the SD protocol. In addition, a person skilled in the art may learn that an independent SD protocol is similar to an independent eMMC protocol in functions. When the storage device has a processing capability for the SD protocol and a processing capability for the eMMC protocol, the storage device can be compatible with the processing capabilities for the two communications protocols.

In an embodiment, step S110 may specifically include: receiving an initialization command.

FIG. 2 is a flowchart of a storage device operation method according to a second embodiment of the present invention. The method 200 includes the following steps.

Step 210: Receive an initialization command.

A storage device may receive the initialization command from an external host, so that the storage device makes a response to the initialization command sent by the host, to perform an initialization operation.

Step 220: Identify the received initialization command.

Specifically, after receiving the initialization command sent by the host, the storage device identifies the initialization command, so that the storage device determines, based on an identification result, whether to execute a first communications protocol or a second communications protocol.

Step 230: If it is identified that the initialization command is a CMD 1 command, the storage device executes an eMMC protocol, to perform an initialization operation in response to the CMD 1 command.

After receiving the initialization command, the storage device identifies the initialization command. If the identified initialization command is the CMD 1 command, the storage device is to execute the eMMC protocol. In response to the CMD 1 command, the storage device is initialized. In other words, the storage device performs an initialization operation, until an entire initialization process is completed.

Step 240: Send an initialization result to the host.

The storage device determines, according to the identified initialization command, a communications protocol to be executed by the storage device, and performs initialization based on the communications protocol. In an initialization process, the storage device continuously returns the initialization result to the host, and sends initialization complete information to the host after the initialization is completed, so that the host determines, based on the initialization result, whether the storage device completes the initialization, to perform a next operation.

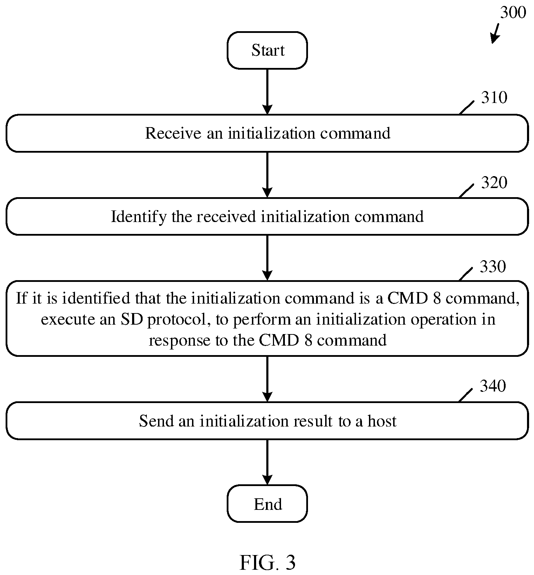

FIG. 3 is a flowchart of a storage device operation method according to a third embodiment of the present invention. The method 300 includes the following steps.

Step 310: Receive an initialization command.

A storage device may receive the initialization command from an external host, so that the storage device makes a response to the initialization command sent by the host, to perform an initialization operation.

Step 320: Identify the received initialization command.

Specifically, after receiving the initialization command sent by the host, the storage device identifies the initialization command, so that the storage device determines, based on an identification result, whether to execute a first communications protocol or a second communications protocol.

Step 330: If it is identified that the initialization command is a CMD 8 command, execute an SD protocol, to perform an initialization operation in response to the CMD 8 command.

After receiving the initialization command, the storage device identifies the initialization command. If the identified initialization command is the CMD 8 command, the storage device is to execute the SD protocol. In response to the CMD 8 command, the storage device is initialized. In other words, the storage device performs an initialization operation, until an entire initialization process is completed.

Step 340: Send an initialization result to the host.

The storage device determines, according to the identified initialization command, a communications protocol to be executed by the storage device, and performs initialization based on the communications protocol. In an initialization process, the storage device continuously returns the initialization result to the host, and sends initialization complete information to the host after the initialization is completed, so that the host determines, based on the initialization result, whether the storage device completes the initialization, to perform a next operation.

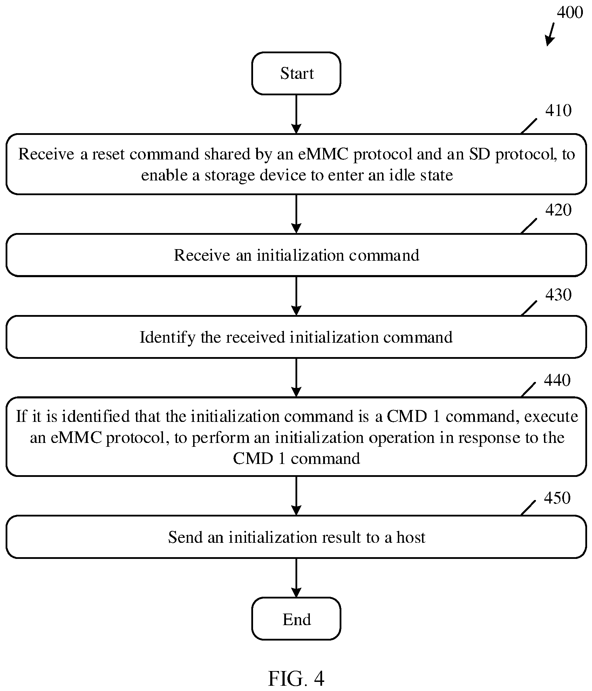

FIG. 4 is a flowchart, based on the foregoing second embodiment, of a storage device operation method according to a fourth embodiment of the present invention. The method 400 includes the following steps.

Step 410: Receive a reset command shared by an eMMC protocol and an SD protocol, to enable a storage device to enter an idle state.

In an example, the reset command is a CMD 0 command.

Step 420: Receive an initialization command.

The storage device may receive the initialization command from an external host, so that the storage device makes a response to the initialization command sent by the host, to perform an initialization operation.

Step 430: Identify the received initialization command.

Specifically, after receiving the initialization command sent by the host, the storage device identifies the initialization command, so that the storage device determines, based on an identification result, whether to execute a first communications protocol or a second communications protocol.

Step 440: If it is identified that the initialization command is a CMD 1 command, execute the eMMC protocol, to perform an initialization operation in response to the CMD 1 command.

After receiving the initialization command, the storage device identifies the initialization command. If the identified initialization command is the CMD 1 command, the storage device is to execute the eMMC protocol. In response to the CMD 1 command, the storage device is initialized. In other words, the storage device performs an initialization operation, until an entire initialization process is completed.

Step 450: Send an initialization result to the host.

The storage device determines, according to the identified initialization command, a communications protocol to be executed by the storage device, and performs initialization based on the communications protocol. In an initialization process, the storage device continuously returns the initialization result to the host, and sends initialization complete information to the host after the initialization is completed, so that the host determines, based on the initialization result, whether the storage device completes the initialization, to perform a next operation.

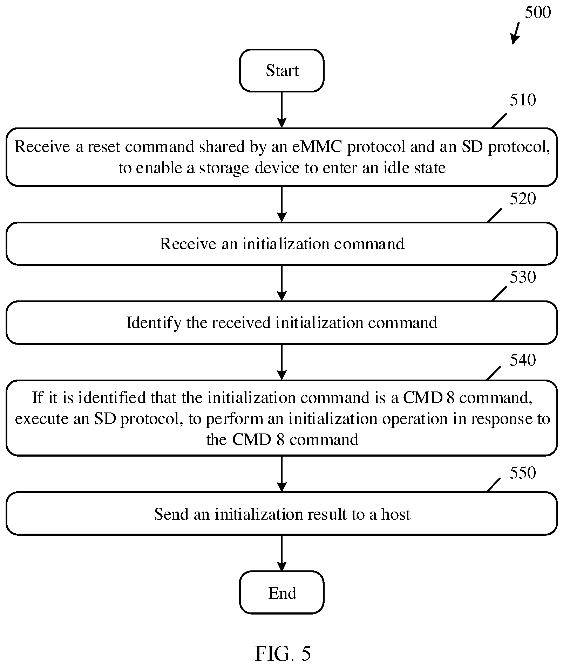

FIG. 5 is a flowchart, based on the foregoing third embodiment, of a storage device operation method according to a fifth embodiment of the present invention. The method 500 includes the following steps.

Step 510: Receive a reset command shared by an eMMC protocol and an SD protocol, to enable a storage device to enter an idle state.

In an example, the reset command is a CMD 0 command.

Step 520: Receive an initialization command.

The storage device may receive the initialization command from an external host, so that the storage device makes a response to the initialization command sent by the host, to perform an initialization operation.

Step 530: Identify the received initialization command.

Specifically, after receiving the initialization command sent by the host, the storage device identifies the initialization command, so that the storage device determines, based on an identification result, whether to execute a first communications protocol or a second communications protocol.

Step 540: If it is identified that the initialization command is a CMD 8 command, execute the SD protocol, to perform an initialization operation in response to the CMD 8 command.

After receiving the initialization command, the storage device identifies the initialization command. If the identified initialization command is the CMD 8 command, the storage device is to execute the SD protocol. In response to the CMD 8 command, the storage device is initialized. In other words, the storage device performs an initialization operation, until an entire initialization process is completed.

Step 550: Send an initialization result to the host.

The storage device determines, according to the identified initialization command, a communications protocol to be executed by the storage device, and performs initialization based on the communications protocol. In an initialization process, the storage device continuously returns the initialization result to the host, and sends initialization complete information to the host after the initialization is completed, so that the host determines, based on the initialization result, whether the storage device completes the initialization, to perform a next operation.

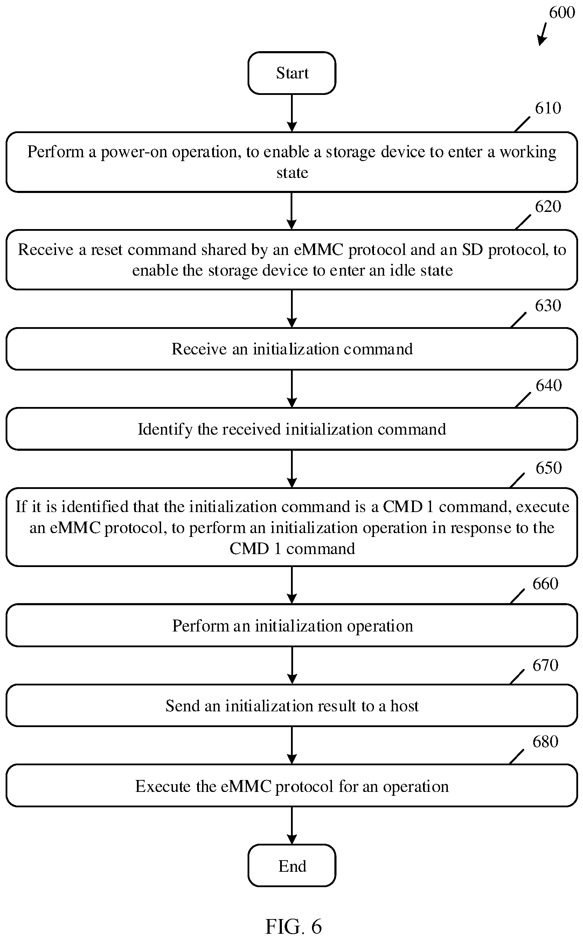

FIG. 6 is a flowchart of a storage device operation method according to a sixth embodiment of the present invention. The method 600 includes the following steps.

Step 610: Perform a power-on operation, to enable a storage device to enter a working state.

In an example, a voltage used during the power-on operation is 3.3 V.

Step 620: Receive a reset command shared by an eMMC protocol and an SD protocol, to enable the storage device to enter an idle state.

In an example, the reset command is a CMD 0 command.

Step 630: Receive an initialization command.

The storage device may receive the initialization command from an external host, so that the storage device makes a response to the initialization command sent by the host, to perform an initialization operation.

Step 640: Identify the received initialization command.

Specifically, after receiving the initialization command sent by the host, the storage device identifies the initialization command, so that the storage device determines, based on an identification result, whether to execute a first communications protocol or a second communications protocol.

Step 650: If it is identified that the initialization command is a CMD 1 command, execute the eMMC protocol, to perform an initialization operation in response to the CMD 1 command.

After receiving the initialization command, the storage device identifies the initialization command. If the identified initialization command is the CMD 1 command, the storage device is to execute the eMMC protocol. In response to the CMD 1 command, the storage device is initialized. In other words, the storage device performs an initialization operation, until an entire initialization process is completed.

Step 660: Perform an initialization operation.

Step 670: Send an initialization result to the host.

The storage device determines, according to the identified initialization command, a communications protocol to be executed by the storage device, and performs initialization based on the communications protocol. In an initialization process, the storage device continuously returns the initialization result to the host, and sends initialization complete information to the host after the initialization is completed, so that the host determines, based on the initialization result, whether the storage device completes the initialization, to perform a next operation.

Step 680: Execute the eMMC protocol for an operation.

In this embodiment, the power-on operation is performed, to enable the storage device to enter the working state. Subsequently, the reset command shared by the eMMC protocol and the SD protocol is received, to enable the storage device to enter the idle state. Then the initialization command is received, and after executing the eMMC protocol, the storage device performs the initialization operation in response to the initialization command, and sends the initialization result to the external host, so that the storage device executes the eMMC protocol to perform a next operation.

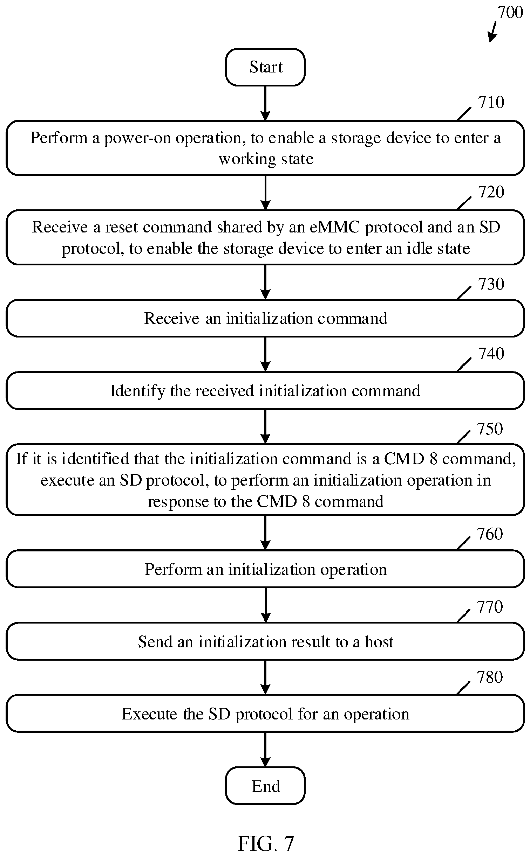

FIG. 7 is a flowchart of a storage device operation method according to a seventh embodiment of the present invention. The method 700 includes the following steps.

Step 710: Perform a power-on operation, to enable a storage device to enter a working state.

In an example, a voltage used during the power-on operation is 3.3 V.

Step 720: Receive a reset command shared by an eMMC protocol and an SD protocol, to enable the storage device to enter an idle state.

In an example, the reset command is a CMD 0 command.

Step 730: Receive an initialization command.

The storage device may receive the initialization command from an external host, so that the storage device makes a response to the initialization command sent by the host, to perform an initialization operation.

Step 740: Identify the received initialization command.

Step 750: If it is identified that the initialization command is a CMD 8 command, execute an SD protocol, to perform an initialization operation in response to the SD protocol.

Step 760: Perform an initialization operation.

Step 770: Send an initialization result to the host.

The storage device determines, according to the identified initialization command, a communications protocol to be executed by the storage device, and performs initialization based on the communications protocol. In an initialization process, the storage device continuously returns the initialization result to the host, and sends initialization complete information to the host after the initialization is completed, so that the host determines, based on the initialization result, whether the storage device completes the initialization, to perform a next operation.

Step 780: Execute the SD protocol for an operation.

In this embodiment, the power-on operation is performed, to enable the storage device to enter the working state. Subsequently, the reset command shared by the eMMC protocol and the SD protocol is received, to enable the storage device to enter the idle state. Then the initialization command is received, and after executing the SD protocol, the storage device performs the initialization operation in response to the initialization command, so that the storage device executes the SD protocol to perform a next operation.

The present invention further provides a storage device. The storage device has a processing capability for a first communications protocol and a processing capability for a second communications protocol. The storage device is configured to perform the operation method in the foregoing embodiment. For details, refer to the foregoing embodiment. Details are not described herein again.

A person skilled in the art easily learns that many modifications and changes can be made to the apparatus and method while teaching content of the present invention is maintained. Therefore, the foregoing disclosed content should be considered as being limited only by the scope of the appended claims.

## Claims

1. A storage device operation method applied to a storage device comprising a processing capability for a first communications protocol and a processing capability for a second communications protocol; and the method comprises:
receiving an adaptive command; and
identifying the adaptive command; and
determining, according to the adaptive command, to execute the first communications protocol or the second communications protocol for an operation.

2. The method according to claim 1, wherein one of the first communications protocol and the second communications protocol is an SD protocol, and the other is an eMMC protocol.

3. The method according to claim 2, wherein the receiving an adaptive command comprises: receiving an initialization command.

4. The method according to claim 3, wherein after the identifying the adaptive command, the method comprises:
if it is identified that the initialization command is a CMD 1 command, executing the eMMC protocol, to perform an initialization operation in response to the CMD 1 command.

5. The method according to claim 3, wherein after the identifying the adaptive command, the method comprises:
if it is identified that the initialization command is a CMD 8 command, executing the SD protocol, to perform an initialization operation in response to the CMD 8 command.

6. The method according to claim 4 or 5, wherein before the receiving an initialization command, the receiving an adaptive command further comprises:
receiving a reset command shared by the eMMC protocol and the SD protocol, to enable the storage device to enter an idle state.

7. The method according to claim 6, wherein the reset command is a CMD 0 command.

8. The method according to claim 4 or 5, wherein before the receiving an adaptive command, the method further comprises:
performing a power-on operation, to enable the storage device to enter a working state; and
after the initialization operation is performed, the method further comprises:
sending an initialization result, to execute the eMMC protocol or the SD protocol for an operation.

9. The method according to claim 8, wherein
a voltage used during the power-on operation is 3.3 V.

10. A storage device, wherein the storage device has a processing capability for a first communications protocol and a processing capability for a second communications protocol, and the storage device is configured to perform the method according to any one of claims 1 to 9.
